# EUROPEAN PATENT APPLICATION

(11) **EP 1 158 451 A2**
(43) Date of publication of application: **28.11.2001**
(21) Application number: 01304586.9
(22) Date of filing: 24.05.2001
(51) Int. Cl.: G06K 7/00

(54) **Improvements in data acquisition systems**

(30) Priority: 25.05.2000 GB 0012799
(71) Applicant: Egbert H. Taylor & Company Limited, Elmley Lovett, WR9 0QZ Worcestershire (GB)
(72) Inventor: Henderson, James Matthew, Deansway, Worcester WR1 2DJ (GB)
(74) Representative: Chettle, Adrian John

(57) **Abstract**

A data acquisition system suitable for refuse vehicles includes a hand held scanner (17) incorporating a memory and an antenna for acquiring unique identity data. The scanner (17) may be mounted on a vehicle for direct acquisition of identity data, or may be used in a hand held manner. In an alternative embodiment the scanner (17) may use a vehicle mounted antenna (14) and itself be mounted in a protected environment such as a vehicle cab.

## Description

This invention relates to data acquisition, and particularly though not exclusively to a system suitable for use in connection with refuse collection.

It has been proposed to charge refuse producers according to the amount of refuse collected by vehicle. Such refuse may conveniently be weighed before discharge into the body of a refuse collection vehicle. Typically a lifting and discharging device is provided on the vehicle, and a refuse container is weighed on the upstroke and down stroke; the difference represents the weight of refuse discharged into the vehicle.

In order for an invoice to be generated, each refuse container must have a unique identity, and this identity must be captured as the container is emptied.

It has been proposed to include passive data chips on waste containers, such chips being activated when in the field of an antenna to pass a unique container identity to the antenna, and thence to a data base. Information as to container type and location may also be transferred. This kind of system need not be used in conjunction with a weighing system, but can be a useful means of tracking waste containers, recording container damage, and optimising vehicle routing.

Date chips can be fitted to refuse containers in a position protected from contact damage and direct environmental exposure to e.g. sun and rain. An antenna may also be fitted to a refuse vehicle in a protected position but because of the wide variety of refuse vehicles, it may be somewhat difficult to ensure that all waste container data can be acquired by all refuse vehicles. This problem is made worse by the fact that a fleet of refuse vehicles generally includes old and new vehicles having different types of container lifting equipment, and a variety of container types.

For these reasons, a refuse operator may also provide a hand held scanner/keypad for acquiring a unique bin identity in cases where the vehicle mounted antenna is unable to identify the waste container being emptied. The hand-held scanner is also useful as a backup in case of a vehicle system failure, and to enter manual codes indicative of, for example, a damaged container, a missing container, or unauthorised container contents.

As a result however, costs are substantially increased since both vehicle and hand held systems are required, and at the end of the working shift, data must be transferred from both systems to a central data manipulator for sorting and bill preparation. The interface between systems can be particularly problematic, especially if data is acquired by both the vehicle and the hand held system.

According to the present invention there is provided a data acquisition system for a vehicle, and adapted to acquire unique identity data from a plurality of units, the system comprising a hand held scanner incorporating an antenna adapted to acquire said identity data and a memory to store said data, wherein the vehicle is provided with a mounting for said scanner, said mounting being located in a position to acquire said data when in the vicinity of one of said units.

Such a system ensures that a single scanner acquires data, either through vehicle mounting or whilst being hand held. The system is particularly suitable for refuse vehicles where the scanner can be located in a protected mounting adjacent the container lifting apparatus, but be removable for hand held use in the event of failure to detect the identity of a container. The scanner preferably includes a rechargeable power source and is operable independently of the vehicle - that is to say preferably the scanner is not connected to the vehicle by means of a lead.

A dedicated vehicle mounted scanning system is thus not required. The mounting for the scanner according to the invention can be readily and easily moved to a new location should adaptation to a new or different kind of container be required. Most importantly only one data acquisition system is required and thus the problem of interfacing hand held and vehicle mounted systems is avoided.

In a modified form the invention may include a vehicle mounted antenna driven by the scanner when mounted on the vehicle. In this case, the scanner need not be in the vicinity of one of the units, but can be contained in a fully protected environment, such as in the vehicle cab. This arrangement, although slightly more complex simply requires an additional antenna, which may be designed specifically to be vehicle mounted, to have a greater power and range, and to be of more robust construction than would be practicable for hand held device. As a consequence the hand held scanner can be miniaturised since a housing capable of resisting direct environmental attack is not required. This alternative retains the use of a single computer in the scanner to drive both antenna, and thus a separate computer for the vehicle scanner is avoided.

It is envisaged that the scanner will incorporate a rechargeable battery for hand held use, but be powered by the vehicle electrical system when located in its mounting. A more powerful vehicle mounted antenna may receive power from the vehicle electrical system but remains under the control of the scanner.

Preferably the scanner mounting includes electrical connection for permitting the scanner to connect directly to the vehicle electrical system, whereby the scanner may be powered and/or recharged.

In a preferred embodiment, the scanner includes a keypad for direct entry to information including for example unique identity data and/or other information concerning the units such as condition and location.

Preferably the system is adapted to acquire data on operation of a proximity sensor for a unit. In the case of a refuse vehicle such a sensor may be located on a container lifting device and sense the presence or absence of a container. Upon activation of the proximity sensor, the system is operable to cause the antenna to acquire the unique identity data and/or to record other information. In the case of a refuse vehicle the other information is for example the weight of refuse discharged. Any suitable container weighing device may be utilised in the system of the present invention.

The system may include an indicator to indicate acquisition of data, and/or an alarm to indicate non-acquisition of identity data. In the case of the latter the operator removes the scanner from the holder and either uses the scanner antenna to capture identity data by holding the scanner close to e.g. an embedded identity chip, or manually enters identity data via a keypad.

The system may prevent acquisition of additional data until unique identity data is entered for each item identified by the proximity sensor.

The invention also includes a method of operating a system as described herein and comprising the steps of attempting to acquire unique identity data from a unit via a vehicle mounted antenna;
actuating an indicator in the event of non-acquisition of identity data or incomplete acquisition of identity data;
in response to said indicator, remaining a hand held scanner from a holder and making a further attempt to acquire unique identity data via an antenna of said scanner; or
in response to said indicator, removing a hand held scanner from a holder and entering unique identity data via a keypad.

In another preferred embodiment, the system of the invention may further include a manually operable input device adapted for mounting on a vehicle and for transmitting information to said scanner. In the case of a refuse vehicle such an input device may be mounted adjacent a container lifting apparatus and comprise a switch or other signalling device to indicate various container conditions, such as damaged lid, damaged caster, damage body, fire damage, etc.

Such an input device may be enabled by a proximity sensor to avoid inadvertent transmission of information when a unit is not in the vicinity of an antenna.

In the case of a refuse vehicle, such an input device permits simple entry of damage codes, for example by pressing one of several buttons, and preparation of a report identifying each damaged container by the unique identity data.

The method may include the further steps of enabling an input device described above, entering and transmitting information concerning a unit.

Other features of the invention will be apparent for the following description of a preferred embodiment shown by way of example only in the accompanying drawings in which:
Fig.1 illustrates in schematic plan, a refuse vehicle, base station and refuse container;
Fig.2 illustrates the rear portion of an alternative refuse vehicle.

With reference to the drawings, a refuse vehicle 10 comprises a cab area and a refuse body 12. At the rear of the refuse body the vehicle is provided with a lifting device (not illustrated) for a refuse container 13, the device raising the container and upending it over the refuse body so that waste falls from the container into the body. The container is then lowered to the ground and released.

A vehicle may have two or three lifting devices side by side, and these may be coupled in order to lift larger waste containers.

At the rear of the vehicle two antenna 14 are provided, one each associated with a lifting device. A greater or fewer number of antenna may be provided as will become clear.

Each refuse container 13 has a passive chip 15 mounted thereon in a protected place, the chip being activated when in the vicinity of the antenna 14 and adapted to pass unique identity data to the antenna for further processing. The chip 15 may for example be energised when in an electromagnetic, microwave, or radio frequency field generated at the antenna, to transmit a signal to the antenna. Many ways of transferring data in a contactless manner are known, and the skilled man will select the most appropriate in the circumstances.

Both antenna 14 are connected via command lines 18 to a mounting 16 in the cab area 11 in which is located a removable hand held scanner 17. This scanner 17 comprises a computer having a non-volatile read/write memory and an antenna. The mounting 16 incorporates a power supply from the vehicle, and to which the scanner 17 is connected when properly installed in the mounting 16.

The command line 18 permits two-way communication between the antenna 14 and the scanner 17. In operation the scanner commands operation of the antenna and acquires data, as will become apparent.

The antenna 14 may comprise simply a signal receiving device, in which case a separate device for activating the chip 15 is required, such as a microwave transmitter. For the purposes of this description however it should be understood that each antenna 14 comprises both a receiving and transmitting element.

In use, the normal state of the antenna 14 is passive. The scanner 17 may however be uploaded at the start of the working day with information such as route and the expected sequence of containers to be emptied

When a container is brought to the back of the vehicle to be emptied, a proximity switch or other device (not shown) sends a signal to the scanner 17; such a switch may for example be part of the container lifting device. In response to this signal, the scanner 17 will command the antenna 14 to transmit a chip activating signal, and in response the chip 15 will transmit identity data to the antenna for immediate transfer to the scanner 17. During the container emptying stage, the scanner may command several chip activation cycles in order to verify the identity data.

When the container is returned to the ground after emptying, a signal (or lack of signal) from the proximity switch will permit the antenna to be returned to the passive state.

The scanner preferably also acquires weight data from a load measuring device incorporated in the container lifting device. In this way a personal invoice can be prepared giving the identity of the container emptied, and the weight of the container contents.

The sequence of data acquisition/container emptying continues until the refuse vehicle returns to the depot, at which time the scanner 17 is removed from the vehicle and inserted into a docking port 21 of a base station 22.

Where two or more lifting devices are provided on the refuse vehicle and are capable of independent operation, the scanner will command a respective antenna to acquire data in response to a signal from a respective proximity switch activated for example by initiation of the container lifting sequence. The scanner may command antennae simultaneously or may ensure sequential operation of antenna by interrupting or delaying a second container lifting sequence until the first has been completed. In the case of sequential operation, a single antenna will suffice if capable of acquiring data from a container on any of several lifting devices.

As already explained, should the vehicle mounted antennae be unable to acquire a container identity, or the container be prevented from being emptied, the scanner may be removed from the mounting for hand held scanning of the chip 15. Additionally, or alternatively a message can be input via a keypad. Such a message may include for example information concerning container identity, container location, damage to the container or any other kind of useful information. The scanner may provide a list of suitable kinds of information from which the operator may select the most appropriate.

On return to the vehicle depot, the scanner may be inserted into the docking port 21, and the identity and/or weight data downloaded for invoice preparation. The base station may also be used to upload the scanner with route information etc. for the next work cycle.

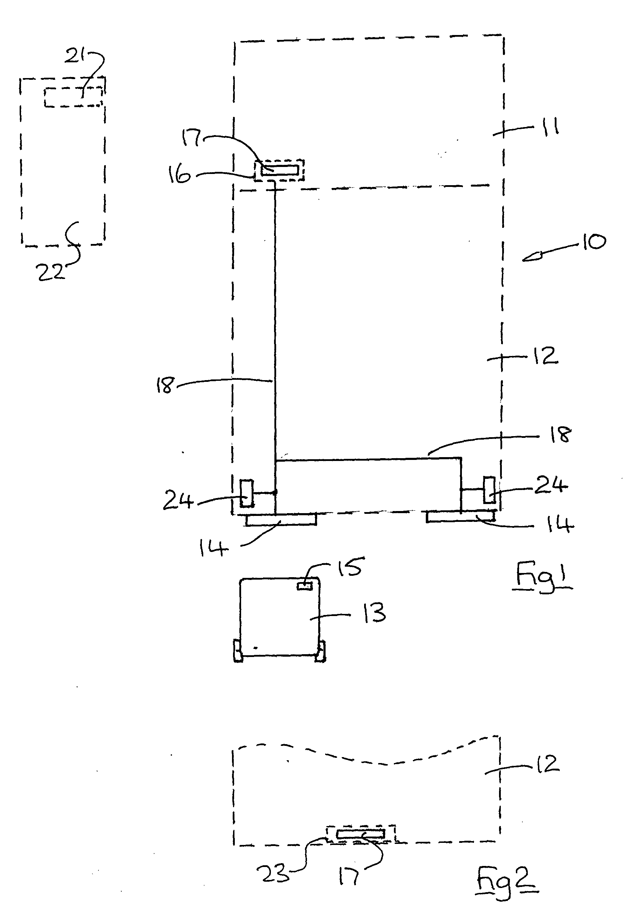

The alternative arrangement of Fig.2 illustrates a rear mounting 23 for the scanner 17. In this case the scanner acquires data directly from the container lifting device(s) and is readily accessible for hand held use.

A high power vehicle mounted antenna 14 may require a separate driver under control of the scanner 17. This driver could be incorporated within the vehicle antenna 14, or be installed remotely therefrom at a suitable location. Communications cables would in this case connect the scanner 17, driver (not shown) and antenna 14.

In an alternative embodiment the invention may be provided with an input device 24 provided adjacent the antennae 14 and in a position readily accessible to the operator. The input device includes an array of switches to record pre-determined codes relating to the container which is being emptied. In this embodiment the input device typically comprises a sealed switch unit having four push buttons corresponding to certain types of container damage, namely damaged lid, damaged castor, fire damage, and impact damage. These buttons permit the most common kinds of damage to be recorded as the container is being emptied, and allow a damage report to be produced following which rectification action can be taken.

The or each input device 24 is connected to the command line. and it is envisaged that the scanner 17 will for example be responsive to signals therefrom only during the period in which the proximity device senses that a container is present. The operator will command actuation of the container lifting device, and at the same time input one or more damage codes if required. The scanner will record such codes against the container identity along with e.g. weight data.

Plainly less or more buttons may be provided for recording information, and any suitable manually operable input device can be utilised.

Although the present invention has been described in connection with refuse collection vehicles, the invention is equally applicable to other uses where similar problems may occur, or where no effective solution has yet been found. The invention is, for example, applicable to any tail-lift goods vehicle, or any vehicle where goods are loaded or unloaded in discrete packages. The invention is not limited to road vehicles, but is equally applicable to rail vehicles, ships, planes and the like.

In particular the invention could also be used for deliveries in order to record any loading or unloading event, and the particular circumstances of the event by means of an equivalent to the input device 24.

## Claims

1. A data acquisition system for a vehicle and adapted to acquire unique identity date from a plurality of units (13), the system comprising a hand held scanner (17) having an antenna adapted to acquire said identity data and a memory to store said data, and the system further including a vehicle mounting (23) for fixing said scanner (17) to a vehicle, said mounting (23) being adapted to place said antenna in a position to acquire said identity data when in the vicinity of one of said units (13), and said scanner (17) being removable from said mounting (23) for hand held use.

2. A data acquisition system for a vehicle and adapted to acquire unique identity data from a plurality of units (13) via a vehicle mounted antenna (14), the system comprising a hand held scanner (17) incorporating a scanner antenna and a memory to store said identity data whereby, in use, said scanner (17) acquires said identity data via one of said vehicle mounted antenna or said scanner antenna, and the system further including a mounting (16) for fixing said scanner (17) to a vehicle, the mounting (16) being adapted to connect said scanner (17) to said vehicle mounted antenna (14), and said scanner being removable from said mounting (16) for hand held use.

3. A system according to claim 1 or claim 2 wherein the said vehicle mounting (16,23) is adapted to connect the scanner to the vehicle electrical supply.

4. A system according to any preceding claim wherein said scanner (17) further includes a power source rechargeable from the vehicle electrical supply.

5. A system according to any preceding claim and further including a manually operable input device (24) adapted for mounting on said vehicle and for transmitting information to said scanner (17).

6. A system according to any preceding claim wherein said scanner (17) includes a keypad and visual display device.

7. A system according to any of claims 1-6 and further including a proximity device adapted for vehicle mounting and adapted to activate said scanner (17) when in the vicinity of one of said units.

8. A system according to claim 7 when dependent on claim 5 wherein said input device (24) is enabled only when said scanner is activated by said proximity device.

9. A refuse vehicle having an antenna (14) adapted to acquire unique container identity data from an identification device of a waste container, and a cab mounting (16) for a hand held scanner (17), the vehicle including means (18) to electrically connect said mounting (16) and antenna (14) whereby signals can be passed between said scanner (17) and antenna (14), and said scanner (17) including a memory to record said identity data.

10. A vehicle according to claim 9 and further including an external manually operated input device (24), and means to electrically connect said input device (24) and said mounting (16) whereby inputs at said input device can be passed to said scanner (17).
